# FASCICULE DE BREVET EUROPEEN

(11) **EP 2 675 331 B1**
(45) Date de publication et mention de la délivrance du brevet: **12.09.2018**
(21) Numéro de dépôt: 12704760.3
(22) Date de dépôt: 10.02.2012
(51) Int. Cl.: A47J 43/07, A47J 43/044, A47J 44/00, A47J 43/08, A47J 43/06

(54) **APPAREIL ELECTROMENAGER DE PREPARATION CULINAIRE COMPORTANT DES MOYENS POUR L'ENTRAINEMENT D'UN OUTIL DE TRAVAIL SELON UN MOUVEMENT PLANETAIRE**
ELEKTRISCHES HAUSHALTSGERÄT ZUR SPEISENZUBEREITUNG MIT EINER VORRICHTUNG FÜR DEN ANTRIEB EINES ARBEITSWERKZEUGES IN EINER PLANETENBEWEGUNG
ELECTRIC HOUSEHOLD APPLIANCE FOR PREPARING FOOD, COMPRISING A MEANS FOR DRIVING A WORKING TOOL IN A PLANETARY MOTION

(30) Priorité: 18.02.2011 FR 1151371
(43) Date de publication de la demande: 25.12.2013
(73) Titulaire: SEB S.A., 69130 Ecully (FR)
(72) Inventeur: GUILMART, Philippe, F-53300 Saint-mars-sur-colmont (FR); LEMERCIER, Michel, F-53250 Javron-les-chapelles (FR); DOYEN, Nadine, F-53100 Mayenne (FR)
(74) Mandataire: Bourrières, Patrice
(86) Numéro de dépôt international: PCT/EP2012/052348
(87) Numéro de publication internationale: WO 2012/110428

(56) Documents cités:
- EP-A1- 1 430 824
- DE-U1- 9 006 927
- US-A- 4 131 034
- US-A1- 2009 147 618

## Description

La présente invention se rapporte au domaine technique général des appareils électroménagers de préparation culinaire comportant un socle destiné à recevoir un récipient de travail et comprenant une tête solidaire du socle comportant une platine entraînée en rotation autour d'un axe (X) par un moteur, la platine comprenant un entraîneur excentré permettant l'entraînement d'un outil de travail au dessus du socle selon un mouvement planétaire.

Il est connu, des demandes de brevet FR 1 019 048, et US4131034 un appareil électroménager de préparation culinaire comprenant un socle supportant une cuve et comportant une tête solidaire du socle comprenant une platine entraînée en rotation autour d'un axe par un moteur, la platine comportant un entraîneur rotatif permettant l'entraînement en rotation d'un organe batteur selon un mouvement planétaire dans la cuve.

Un tel appareil présente l'avantage de permettre le malaxage de pâtes ou le mixage d'ingrédients dans la cuve et présente également l'avantage de comporter une sortie frontale munie d'un entraîneur sur lequel peut être accouplé différents types d'accessoires, telle par exemple une tête hachoir, procurant ainsi une grande polyvalence d'utilisation. Cependant, une telle sortie frontale présente l'inconvénient de complexifier l'assemblage de la tête de l'appareil et d'être relativement coûteuse à mettre en oeuvre. De plus, une telle sortie frontale présente l'inconvénient d'augmenter l'encombrement de la tête de l'appareil qui devient nécessairement volumineuse lorsqu'elle intègre une telle sortie. Enfin, une telle sortie frontale présente l'inconvénient d'être disposée en hauteur de sorte que l'appareil peut basculer vers l'avant lorsque l'utilisateur exerce une pression importante sur l'accessoire connecté à la sortie frontale et lorsque le poids de l'appareil est peu important.

Aussi, un but de la présente invention est de remédier à ces inconvénients en proposant un appareil électroménager de préparation culinaire comportant une platine pour l'entraînement d'un outil de travail selon un mouvement planétaire, qui puisse à la fois être compact, relativement léger et polyvalent en permettant la connexion d'accessoires, telle une tête hachoir, sur une sortie d'entraînement dédiée. Un autre but de la présente invention est de proposer un appareil électroménager de préparation culinaire permettant toutes ces fonctions qui soit simple et économique à mettre en oeuvre.

A cet effet, l'invention se rapporte à un appareil électroménager de préparation culinaire comportant un socle destiné à recevoir un récipient de travail et comprenant une tête solidaire du socle comportant une platine entraînée en rotation autour d'un axe par un moteur, la platine comprenant un entraîneur rotatif excentré permettant l'entraînement d'un outil de travail au dessus du socle selon un mouvement planétaire, caractérisé en ce qu'il comporte un dispositif porte-accessoire pouvant être disposé entre la tête et le socle, le dispositif porte-accessoire comprenant un élément d'accouplement entraîné en rotation par la platine et relié par des moyens d'entraînement à une sortie d'entraînement portée par le dispositif porte-accessoire sur laquelle peut venir s'accoupler un accessoire de travail.

Selon une autre caractéristique de l'invention, la tête est articulée sur le socle, la tête étant mobile entre une position de travail, dans laquelle la tête est sensiblement parallèle au socle, et une position relevée.

Selon encore une autre caractéristique de l'invention, le dispositif porte-accessoire est immobilisé sur le socle par la mise en place de la tête en position de travail.

Selon une autre caractéristique de l'invention, le socle comporte une empreinte de réception du récipient de travail, le dispositif porte-accessoire comportant une embase de forme complémentaire de l'empreinte du socle.

Selon une autre caractéristique de l'invention, la sortie d'entraînement comprend un entraîneur entraîné en rotation autour d'un axe s'étendant horizontalement lorsque le dispositif porte-accessoire est disposé sur le socle, l'entraîneur rotatif étant porté par une paroi latérale du dispositif porte-accessoire.

Selon une autre caractéristique de l'invention, les moyens d'entraînement comportent deux engrenages coniques.

Selon une autre caractéristique de l'invention, les moyens d'entraînement assurent une réduction de la vitesse de rotation entre l'élément d'accouplement et la sortie d'entraînement.

Selon une autre caractéristique de l'invention, la platine comporte un entraîneur central centré sur l'axe (X) de la platine, l'entraîneur venant coopérer avec l'élément d'accouplement du dispositif porte-accessoire.

Selon une autre caractéristique de l'invention, l'entraîneur et l'élément d'accouplement comportent des formes complémentaires assurant un positionnement automatique de ces derniers, l'un par rapport à l'autre, lorsqu'ils sont approchés axialement l'un vers l'autre selon l'axe (X).

Selon une autre caractéristique de l'invention, l'entraîneur et l'élément d'accouplement comportent des dents présentant d'un côté une face sensiblement parallèle à l'axe (X) et de l'autre côté une face oblique par rapport à l'axe (X).

Selon une autre caractéristique de l'invention, le dispositif porte-accessoire comporte une extrémité supérieure comprenant une jupe de protection venant entourer la platine lorsque la tête est en position de travail.

Selon une autre caractéristique de l'invention, le dispositif porte-accessoire comporte des moyens pour sa fixation sur le socle.

Selon encore une autre caractéristique de l'invention, l'accessoire de travail est une tête hachoir ou un accessoire pour pâte alimentaire.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de préparation culinaire selon un mode particulier de réalisation de l'invention, l'appareil étant représenté avec le bras en position relevée ;
- la figure 2 est une vue en perspective de l'appareil de la figure 1 équipé du dispositif porte-accessoire accouplé à une tête hachoir, avec le bras en position de travail ;
- la figure 3 est une vue en perspective du dispositif porte-accessoire de la figure 2 représenté seul ;
- la figure 4 est une vue en perspective du dispositif porte-accessoire démuni de sa paroi externe pour laisser apparaître le mécanisme interne ;
- la figure 5 est une vue en coupe partielle, de côté, de l'appareil de la figure 2.

Seuls les éléments nécessaires à la compréhension de l'invention ont été représentés. Pour faciliter la lecture des dessins, les mêmes éléments portent les mêmes références d'une figure à l'autre.

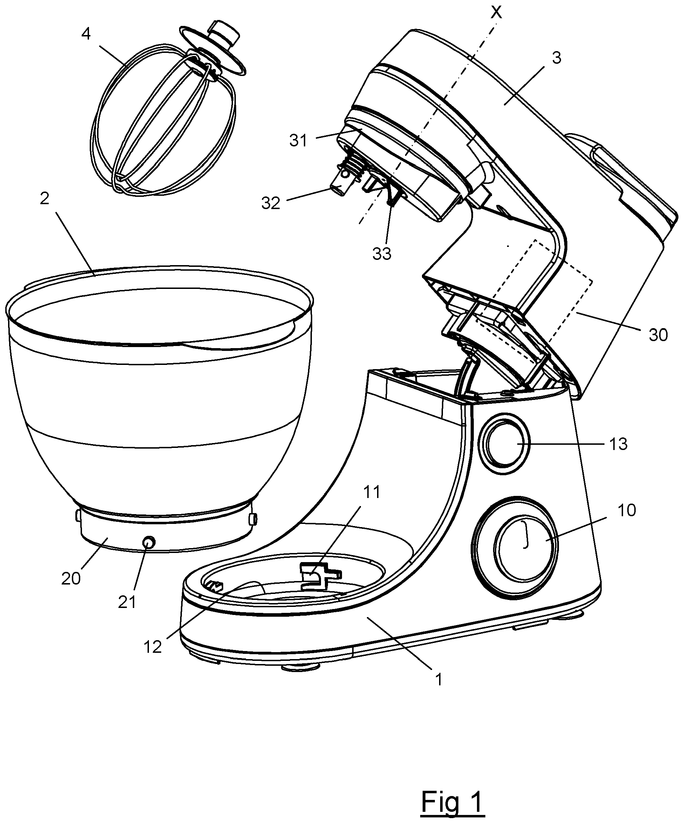

La figure 1 représente un appareil électroménager de préparation culinaire comprenant un socle 1 destiné à supporter une cuve 2 et comportant une tête 3 articulée solidaire du socle 1, la tête 3 renfermant un moteur 30 électrique, illustré en pointillés sur la figure 1, dont la mise en marche et la vitesse sont contrôlées par un bouton de commande 10 disposé sur une face latérale du socle 1.

La cuve 2 est montée de manière amovible sur le socle 1 et comporte à cet effet une jupe inférieure 20 comportant des ergots 21 venant s'engager dans des rainures 11 d'une empreinte 12 du socle 1 afin de réaliser une liaison de type baïonnette.

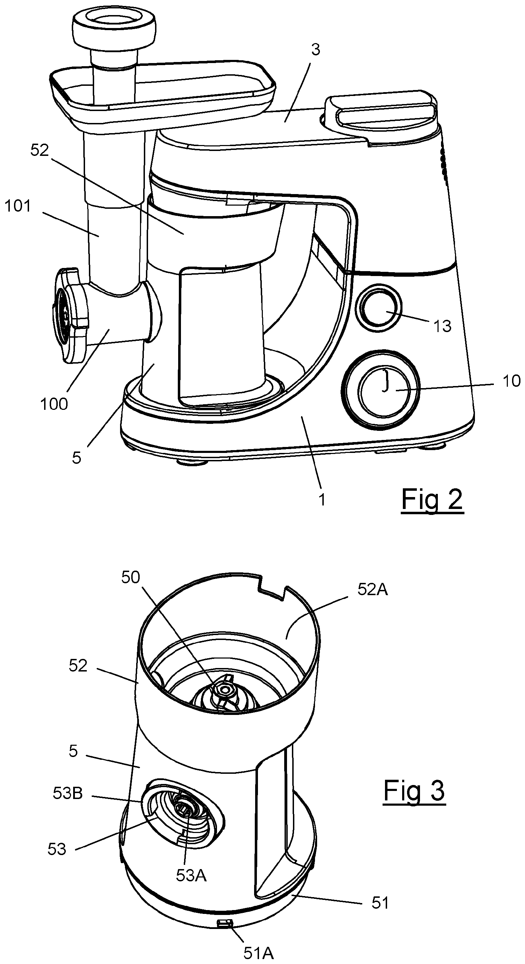

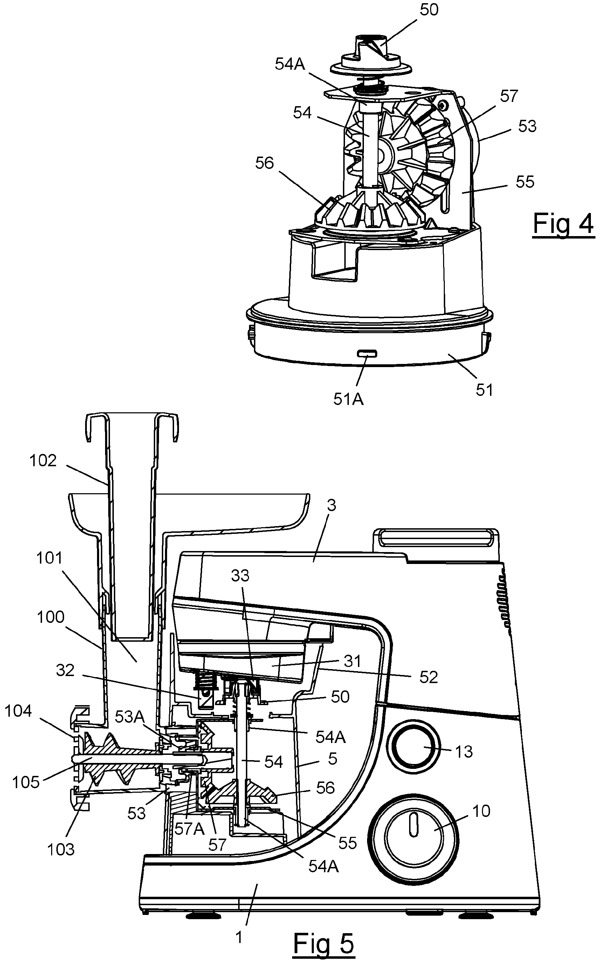

La tête 3 est mobile en rotation selon un axe sensiblement horizontal entre une position relevée, telle qu'illustrée figure 1, dans laquelle la cuve 2 peut être facilement retirée du socle 1, et une position de travail, illustrée notamment sur les figures 2 et 5, dans laquelle la tête 3 comprend une extrémité libre s'étendant sensiblement horizontalement au dessus du socle 1.

De manière avantageuse, l'appareil comporte un dispositif de verrouillage, connu en soi et non représenté sur les figures, immobilisant automatiquement la tête 3 lorsque cette dernière atteint la position relevée ou la position de travail, ainsi qu'un bouton de déverrouillage 13, disposé sur la face latérale du socle 1, devant être actionné pour permettre le déplacement de la tête 3 d'une position à l'autre.

De manière connue en soi, l'extrémité libre de la tête 3 comporte une platine 31 inférieure comprenant des moyens pour l'entraînement d'un outil de travail 4 selon un mouvement planétaire. À cet effet, la platine 31 est mobile en rotation autour d'un axe central (X) et comporte un arbre d'entraînement rotatif 32 assurant l'entraînement en rotation de l'outil de travail 4 sur lui-même, cet ensemble rotatif étant relié au moteur 30 par l'intermédiaire d'une chaîne cinématique mettant notamment en oeuvre un train d'engrenage épicycloïdal selon une conception très largement connue de l'homme du métier.

La platine 31 comporte également un entraîneur central 33 comprenant deux dents faisant saillie sur la platine 31, les deux dents présentant d'un côté une face droite, parallèle à l'axe X, et à l'opposé une face oblique.

Conformément aux figures 2 et 3, l'appareil électroménager selon l'invention comporte un dispositif porte-accessoire 5 pouvant être disposé entre le socle 1 et la tête 3 de l'appareil, le dispositif porte-accessoire comprenant une bague d'accouplement 50 venant s'accoupler avec l'entraîneur central 33 de la platine 31 lorsque la tête 3 est amenée en position de travail.

De manière préférentielle, la bague d'accouplement 50 présente une forme complémentaire de celle de l'entraîneur central de la platine et comporte deux dents disposées à 180° l'une de l'autre présentant chacune une face droite, orientée parallèlement à l'axe X, venant coopérer avec la face droite des dents de l'entraîneur central 33, venant en vis-à-vis lorsque l'entraîneur central est entraîné en rotation par le moteur 30, et une face opposée oblique venant coopérer avec la face oblique des dents de l'entraîneur central 33 pour assurer un positionnement automatique de la bague d'accouplement 50 par rapport à l'entraîneur central lorsque la tête 3 est amenée en position de travail.

Le dispositif porte-accessoire 5 comporte préférentiellement une embase circulaire 51, de forme complémentaire de celle de l'empreinte 12 du socle 1, comportant des ergots de verrouillage 51A venant s'engager dans les rainures 11 de l'empreinte 12 de manière à immobiliser le dispositif porte-accessoire sur le socle 1, et comprend un corps s'élevant verticalement depuis l'embase 51 jusqu'à une extrémité supérieure munie d'une jupe de protection 52 définissant une cavité de réception 52A dans laquelle vient s'engager la platine 31 lorsque la tête 3 est en position de travail, la bague d'accouplement 50 faisant saillie au fond de la cavité de réception 52A.

Le corps du dispositif porte-accessoire 5 présente avantageusement la forme d'une colonne et renferme des moyens d'entraînement reliant la bague d'accouplement 50 à une sortie d'entraînement 53 portée par une paroi latérale du corps et située sensiblement à mi-hauteur du corps, la sortie d'entraînement 53 comprenant un entraîneur 53A, orienté horizontalement, débouchant au centre d'un manchon comprenant des griffes de fixation 53B permettant l'accouplement d'un accessoire 100, telle une tête hachoir telle qu'illustrée sur la figure 2, selon une liaison de type baïonnette.

Conformément à la figure 4, les moyens d'entraînement comportent un arbre vertical 54 à l'extrémité supérieure duquel est fixée la bague d'accouplement 50, l'arbre 54 étant guidé par deux paliers 54A portés par un bâti 55 métallique en forme de U et comprenant une extrémité inférieure solidaire d'un premier engrenage 56 conique, ce premier engrenage 56 engrenant sur un second engrenage 57 conique orienté perpendiculairement au premier engrenage 56, le second engrenage 57 étant guidé par un palier 57A porté par le bâti 55, visible sur la figure 5, et étant solidaire de l'entraîneur 53A.

De manière préférentielle, les deux engrenages 56, 57 coniques sont dimensionnés de manière à réaliser une réduction de la vitesse de rotation entre la bague d'accouplement 50 et l'entraîneur 53A de la sortie d'entraînement 53. Dans l'exemple illustré, le premier engrenage comporte 15 dents et le second engrenage comporte 18 dents, ce qui permet d'obtenir une réduction de la vitesse de l'ordre de 20%.

Conformément à la figure 5, l'appareil ainsi réalisé présente l'avantage de pouvoir être très facilement utilisé avec un accessoire, telle une tête hachoir 100, pour la réalisation de préparations autres que celle permises par l'entraîneur selon un mouvement planétaire.

En particulier, le dispositif porte-accessoire 5 peut venir se positionner aisément sur le socle 1 lorsque la tête 3 est en position relevée, grâce à son embase 51 adaptée, l'entraîneur central 33 de la platine 31 venant s'accoupler automatiquement avec la bague d'accouplement 50 du dispositif porte-accessoire 5, lorsque la tête 3 est ramenée en position de travail, pour assurer l'entraînement en rotation de cette dernière lorsque la platine 31 est entraînée en rotation par le moteur 30.

A titre d'exemple, la tête hachoir 100 illustrée sur la figure 5 peut être accouplée à la sortie d'entraînement 53 du dispositif porte-accessoire par une simple rotation d'un quart de tour, la tête hachoir 100 comprenant classiquement une goulotte 101 pour l'introduction des aliments équipée d'un poussoir 102 et une vis sans fin 103 transportant les aliments en direction d'une grille perforée 104, la vis sans fin 103 étant munie d'un arbre d'entraînement 105 comprenant une extrémité nervurée venant s'engager dans l'entraîneur 53A lors de l'accouplement de la tête hachoir 100 sur la sortie d'entraînement 53.

L'appareil ainsi équipé présente l'avantage de procurer une très bonne ergonomie d'utilisation et une grande sécurité de fonctionnement, la jupe de protection 52 du dispositif porte-accessoire 5 entourant la platine 31 et évitant ainsi que l'utilisateur ne puisse entrer en contact avec cette dernière lors de l'utilisation de l'accessoire 100.

De plus, le positionnement bas de la sortie d'entraînement 53, à proximité du socle 1, présente l'avantage de réduire le couple de basculement généré sur l'appareil lorsqu'une pression est exercée sur l'accessoire 100 et notamment sur le poussoir dans le cas de l'utilisation de la tête hachoir. Par ailleurs, une telle disposition basse de l'accessoire facilite la récupération des aliments traités, ces derniers tombant d'une faible hauteur et pouvant être facilement recueillis dans un récipient placé sur le plan de travail sur lequel repose l'appareil.

Enfin, un tel appareil électroménager de préparation culinaire présente l'avantage de comporter une tête très simple à mettre en oeuvre, qui peut présenter une structure compacte, permettant ainsi d'obtenir un appareil présentant un faible encombrement et pouvant être relativement léger.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, la tête hachoir pourra être remplacée par tout type d'accessoire usuellement adapté pour être accouplé à une sortie d'entraînement possédant une faible vitesse de rotation tel un accessoire pour râper les aliments ou un accessoire pour le traitement de pâte alimentaire comme un laminoir ou une extrudeuse.

## Revendications

1. Appareil électroménager de préparation culinaire comportant un socle (1) destiné à recevoir un récipient de travail (2) et comprenant une tête (3) solidaire du socle (1) comportant une platine (31) entraînée en rotation autour d'un axe (X) par un moteur (30), ladite platine (31) comprenant un entraîneur rotatif (32) excentré permettant l'entraînement d'un outil de travail (4) au dessus du socle (1) selon un mouvement planétaire, **caractérisé en ce qu'**il comporte un dispositif porte-accessoire (5) adapté pour être disposé entre la tête (3) et le socle (1), ledit dispositif porte-accessoire (5) comprenant un élément d'accouplement (50) adapté pour être entraîné en rotation par la platine (31) et relié par des moyens d'entraînement (54, 56, 57) à une sortie d'entraînement (53) portée par le dispositif porte-accessoire (5) adaptée pour être accouplée à un accessoire de travail (100).

2. Appareil électroménager de préparation culinaire selon la revendication 1, **caractérisé en ce que** ladite tête (3) est articulée sur le socle (1), la tête (3) étant mobile entre une position de travail, dans laquelle la tête (3) est sensiblement parallèle au socle (1), et une position relevée.

3. Appareil électroménager de préparation culinaire selon la revendication 2, **caractérisé en ce que** le dispositif porte-accessoire (5) est configuré pour être immobilisé sur le socle (1) par la mise en place de la tête (3) en position de travail.

4. Appareil électroménager de préparation culinaire selon la revendication 3, **caractérisé en ce que** ledit socle (1) comporte une empreinte (12) de réception du récipient de travail (2) et **en ce que** le dispositif porte-accessoire (5) comporte une embase (51) de forme complémentaire de l'empreinte (12) du socle (1).

5. Appareil électroménager de préparation culinaire selon l'une quelconque des revendications 1 à 4, **caractérisé en ce que** la sortie d'entraînement (53) comprend un entraîneur (53A) entraîné en rotation autour d'un axe s'étendant horizontalement lorsque le dispositif porte-accessoire (5) est disposé sur le socle (1), ledit entraîneur (53A) rotatif étant porté par une paroi latérale du dispositif porte-accessoire (5).

6. Appareil électroménager de préparation culinaire selon la revendication 5, **caractérisé en ce que** les moyens d'entraînement comportent deux engrenages coniques (56, 57).

7. Appareil électroménager de préparation culinaire selon l'une quelconque des revendications 1 à 6, **caractérisé en ce que** les moyens d'entraînement (54, 56, 57) sont configurés pour assurer une réduction de la vitesse de rotation entre l'élément d'accouplement (50) et la sortie d'entraînement (53).

8. Appareil électroménager de préparation culinaire selon l'une quelconque des revendications 1 à 7, **caractérisé en ce que** ladite platine (31) comporte un entraîneur (33) central centré sur l'axe (X) de la platine (31), ledit entraîneur (33) venant coopérer avec l'élément d'accouplement (50) du dispositif porte-accessoire (5).

9. Appareil électroménager de préparation culinaire selon la revendication 8, **caractérisé en ce que** ledit entraîneur (33) et ledit élément d'accouplement (50) comportent des formes complémentaires assurant un positionnement automatique de l'entraîneur (33) et de l'élément d'accouplement (50), l'un par rapport à l'autre, lorsqu'ils sont approchés axialement l'un vers l'autre selon l'axe (X).

10. Appareil électroménager de préparation culinaire selon la revendication 9, **caractérisé en ce que** ledit entraîneur (33) et ledit élément d'accouplement (50) comportent des dents présentant d'un côté une face sensiblement parallèle à l'axe (X) et de l'autre côté une face oblique par rapport à l'axe (X).

11. Appareil électroménager de préparation culinaire selon l'une quelconque des revendications 1 à 10, **caractérisé en ce que** ledit dispositif porte-accessoire (5) comporte une extrémité supérieure comprenant une jupe de protection (52) venant entourer la platine (31) lorsque la tête (3) est en position de travail.

12. Appareil électroménager de préparation culinaire selon l'une quelconque des revendications 1 à 11, **caractérisé en ce que** ledit dispositif porte-accessoire (5) comporte des moyens (51, 51A) pour sa fixation sur le socle (1).

13. Appareil électroménager de préparation culinaire selon l'une quelconque des revendications 1 à 12, **caractérisé en ce que** ledit accessoire de travail (100) est une tête hachoir ou un accessoire pour pâte alimentaire.

## Patentansprüche

1. Elektrisches Haushaltsgerät zur Nahrungsmittelzubereitung, aufweisend einen Sockel (1), der dazu bestimmt ist, einen Arbeitsbehälter (2) aufzunehmen, und einen mit dem Sockel (1) einstückigen Kopf (3) umfasst, der eine Platte (31) aufweist, die um eine Achse (X) durch einen Motor (30) in Rotation versetzt wird, wobei die Platte (31) einen exzentrischen drehbaren Treiber (32) umfasst, der einen Antrieb eines Arbeitswerkzeugs (4) oberhalb des Sockels (1) entlang einer Planetenbewegung ermöglicht, **dadurch gekennzeichnet, dass** es eine Zubehörhaltervorrichtung (5) aufweist, die eingerichtet ist, zwischen dem Kopf (3) und dem Sockel (1) angeordnet zu werden, wobei die Zubehörhaltervorrichtung (5) ein Kopplungselement (50) umfasst, das eingerichtet ist, durch die Platte (31) in Rotation versetzt zu werden, und durch Antriebsmittel (54, 56, 57) mit einem Antriebsausgang (53) verbunden ist, der von der Zubehörhaltervorrichtung (5) getragen wird, die eingerichtet ist, an ein Arbeitszubehörteil (100) angekoppelt zu werden.

2. Elektrisches Haushaltsgerät zur Nahrungsmittelzubereitung nach Anspruch 1, **dadurch gekennzeichnet, dass** der Kopf (3) an dem Sockel (1) angelenkt ist, wobei der Kopf (3) zwischen einer Arbeitsposition, in der der Kopf (3) im Wesentlichen parallel zu dem Sockel (1) ist, und einer erhöhten Position bewegbar ist.

3. Elektrisches Haushaltsgerät zur Nahrungsmittelzubereitung nach Anspruch 2, **dadurch gekennzeichnet, dass** die Zubehörhaltervorrichtung (5) konfiguriert ist, um auf dem Sockel (1) durch Anordnen des Kopfes (3) in der Arbeitsposition immobilisiert zu werden.

4. Elektrisches Haushaltsgerät zur Nahrungsmittelzubereitung nach Anspruch 3, **dadurch gekennzeichnet, dass** der Sockel (1) eine Vertiefung (12) zur Aufnahme des Arbeitsbehälters (2) aufweist, und dass die Zubehörhaltervorrichtung (5) ein Unterteil (51) mit komplementärer Form zu der Vertiefung (12) des Sockels (1) aufweist.

5. Elektrisches Haushaltsgerät zur Nahrungsmittelzubereitung nach einem der Ansprüche 1 bis 4, **dadurch gekennzeichnet, dass** der Antriebsausgang (53) einen Treiber (53A) umfasst, der um eine Achse gedreht wird, die sich horizontal erstreckt, wenn die Zubehörhaltervorrichtung (5) an dem Sockel (1) angeordnet ist, wobei der drehbare Treiber (53A) von einer Seitenwand der Zubehörhaltervorrichtung (5) getragen wird.

6. Elektrisches Haushaltsgerät zur Nahrungsmittelzubereitung nach Anspruch 5, **dadurch gekennzeichnet, dass** die Antriebsmittel zwei Kegelräder (56, 57) aufweisen.

7. Elektrisches Haushaltsgerät zur Nahrungsmittelzubereitung nach einem der Ansprüche 1 bis 6, **dadurch gekennzeichnet, dass** die Antriebsmittel (54, 56, 57) konfiguriert sind, um eine Reduzierung der Drehzahl zwischen dem Kopplungselement (50) und dem Antriebsausgang (53) zu bewirken.

8. Elektrisches Haushaltsgerät zur Nahrungsmittelzubereitung nach einem der Ansprüche 1 bis 7, **dadurch gekennzeichnet, dass** die Platte (31) einen zentralen Treiber (33) aufweist, der auf der Achse (X) der Platte (31) zentriert ist, wobei der Treiber (33) mit dem Kopplungselement (50) der Zubehörhaltervorrichtung (5) zusammenwirkt.

9. Elektrisches Haushaltsgerät zur Nahrungsmittelzubereitung nach Anspruch 8, **dadurch gekennzeichnet, dass** der Treiber (33) und das Kopplungselement (50) komplementäre Formen aufweisen, die eine automatische Positionierung des Treibers (33) und des Kopplungselements (50), relativ zueinander gewährleisten, wenn sie axial zueinander entlang der Achse (X) angenährt werden.

10. Elektrisches Haushaltsgerät zur Nahrungsmittelzubereitung nach Anspruch 9, **dadurch gekennzeichnet, dass** der Treiber (33) und das Kopplungselement (50) Zähne aufweisen, die auf einer Seite eine Fläche, die im Wesentlichen parallel zu der Achse (X) ist, und auf der anderen Seite eine Fläche aufweisen, die schräg in Bezug auf die Achse (X) ist.

11. Elektrisches Haushaltsgerät zur Nahrungsmittelzubereitung nach einem der Ansprüche 1 bis 10, **dadurch gekennzeichnet, dass** die Zubehörhaltervorrichtung (5) ein oberes Ende aufweist, das einen Schutzmantel (52) umfasst, der die Platte (31) umgibt, wenn der Kopf (3) in der Arbeitsposition ist.

12. Elektrisches Haushaltsgerät zur Nahrungsmittelzubereitung nach einem der Ansprüche 1 bis 11, **dadurch gekennzeichnet, dass** die Zubehörhaltervorrichtung (5) Mittel (51, 51A) zu ihrer Befestigung an dem Sockel (1) aufweist.

13. Elektrisches Haushaltsgerät zur Nahrungsmittelzubereitung nach einem der Ansprüche 1 bis 12, **dadurch gekennzeichnet, dass** das Arbeitszubehör (100) ein Schneidkopf oder ein Zubehörteil für Lebensmittelpaste ist.

## Claims

1. Household appliance for culinary preparations comprising a base (1) configured to receive a work container (2) and comprising a head (3) secured to the base (1) that includes a plate (31) rotationally driven about an axis (X) by a motor (30), said plate (31) comprising an off-centre rotating driving unit (32) configured to drive a work utensil (4) above the base (1) according to a planetary motion, **characterised in that** it comprises an accessory-holding device (5) configured to be arranged between the head (3) and the base (1), said accessory-holding device (5) comprising a coupling element (50) configured to be rotationally driven by the plate (31) and connected by driving means (54, 56, 57) to a driving output (53) supported by the accessory-holding device (5) and configured to be coupled to a work accessory (100).

2. Household appliance for culinary preparations according to claim 1, **characterised in that** said head (3) is hinged on the base (1), the head (3) being moveable between a working position, in which the head (3) is substantially parallel to the base (1), and a raised position.

3. Household appliance for culinary preparations according to claim 2, **characterised in that** the accessory-holding device (5) is configured to be immobilised on the base (1) by placing the head (3) in the working position.

4. Household appliance for culinary preparations according to claim 3, **characterised in that** said base (1) comprises a placement imprint (12) receiving the work container (2) and **in that** the accessory-holding device (5) comprises a baseplate (51) with a shape matching the imprint (12) of the base (1).

5. Household appliance for culinary preparations according to any one of the claims 1 to 4, **characterised in that** the driving output (53) comprises a driving unit (53A) rotationally driven about an axis extending horizontally when the accessory-holding device (5) is arranged on the base (1), said rotating driving unit (53A) being supported by a side wall of the accessory-holding device (5).

6. Household appliance for culinary preparations according to claim 5, **characterised in that** the driving means comprise two bevel gears (56, 57).

7. Household appliance for culinary preparations according to any one of the claims 1 to 6, **characterised in that** the driving means (54, 56, 57) are configured to slow down the rotational speed between the coupling element (50) and the driving output (53).

8. Household appliance for culinary preparations according to any one of the claims 1 to 7, **characterised in that** said plate (31) comprises a central driving unit (33) centred on the axis (X) of the plate (31), whereby said driving unit (33) cooperates with the coupling element (50) of the accessory-holding device (5).

9. Household appliance for culinary preparations according to claim 8, **characterised in that** said driving unit (33) and said coupling element (50) comprise matching shapes to ensure the automatic relative positioning of the driving unit (33) and the coupling element (50), when they are brought closer to one another axially along the axis (X).

10. Household appliance for culinary preparations according to claim 9, **characterised in that** said driving unit (33) and said coupling element (50) comprise teeth that feature on one side a face substantially parallel to the axis (X), and on the other a face that is slanted with respect to the axis (X).

11. Household appliance for culinary preparations according to any one of the claims 1 to 10, **characterised in that** said accessory-holding device (5) comprises an upper end comprising a protective skirt (52) surrounding the plate (31) when the head (3) is in the working position.

12. Household appliance for culinary preparations according to any one of the claims 1 to 11, **characterised in that** said accessory-holding device (5) comprises means (51, 51A) for securing it to the base (1).

13. Household appliance for culinary preparations according to any one of the claims 1 to 12, **characterised in that** said work accessory (100) is a mincer head or an accessory for working edible dough.
